# EUROPÄISCHE PATENTSCHRIFT

(11) **EP 3 596 349 B1**
(45) Veröffentlichungstag und Bekanntmachung des Hinweises auf die Patenterteilung: **21.04.2021**
(21) Anmeldenummer: 18713149.5
(22) Anmeldetag: 14.03.2018
(51) Int. Cl.: F16C 19/38, F16C 19/50, F16C 21/00, F16C 32/06

(54) **HYBRIDE HYDROSTATISCHE LAGERANORDNUNG UND WINDENERGIEANLAGE**
HYBRID HYDROSTATIC BEARING ASSEMBLY AND WIND TURBINE
ENSEMBLE PALIER HYDROSTATIQUE HYBRIDE ET ÉOLIENNE

(30) Priorität: 15.03.2017 DE 102017105576
(43) Veröffentlichungstag der Anmeldung: 22.01.2020
(73) Patentinhaber: thyssenkrupp rothe erde Germany GmbH, 44137 Dortmund (DE); thyssenkrupp AG, 45143 Essen (DE)
(72) Erfinder: LÜNEBURG, Bernd, 45481 Mülheim (DE); ROLLMANN, Jörg, 59558 Lippstadt (DE); ELFERT, Gunther, 59597 Erwitte (DE)
(74) Vertreter: thyssenkrupp Intellectual Property GmbH
(86) Internationale Anmeldenummer: PCT/EP2018/056339
(87) Internationale Veröffentlichungsnummer: WO 2018/167122

(56) Entgegenhaltungen:
- EP-A1- 2 921 728
- GB-A- 2 070 156
- US-A- 3 708 215
- US-A1- 2016 208 850

## Beschreibung

### Stand der Technik

Die vorliegende Erfindung betrifft eine Lageranordnung mit einem ersten Lagerring, einem zweiten Lagerring und mindestens einer Wälzkörperreihe mit mehreren Wälzkörpern, die an einer ersten Laufbahn des ersten Lagerrings und an einer zweiten Laufbahn des zweiten Lagerrings abrollbar angeordnet sind.

Die erfindungsgemäße Lageranordnung kann zur Lagerung einer Rotorwelle einer Windenergieanlage Verwendung finden.

Aus US 2016/0208850 A1 ist ein Wälzlager mit Wälzkörpern bekannt, die in Umfangsrichtung zwischen einem Innenring und einem Außenring abrollen. Das Wälzlager enthält ferner mindestens eine Ölkammer, die durch den inneren Lagerring, den äußeren Lagerring und ein Ölkammergehäuse definiert ist. Unter Druck stehendes Öl in der Ölkammer verringert im Betrieb des Wälzlagers die resultierende Belastung, die das Wälzlager und insbesondere die Wälzkörper erfahren US 2016/0208850 A1 offenbart eine Lageranordnung gemäß dem Oberbegriff des Anspruchs 1.

Aus der EP 2 921 728 A1 ist eine hybride Lageranordnung zur Lagerung einer solchen Rotorwelle einer Windenergieanlage bekannt, welche mehrere Wälzkörperreihen aufweist, deren Wälzkörper an Laufbahnen eines ersten und eines zweiten Lagerrings abrollen können. Zusätzlich sind bei der bekannten Lageranordnung zwei Gleitlagerringe vorgesehen, welche sich hydrodynamisch an einer Gleitfläche des jeweils gegenüberliegenden Lagerrings abstützen. Das bedeutet, dass ein Schmierfilm zwischen dem jeweiligen Gleitlagerring und der Gleitfläche erst durch die Bewegung der Lagerringe gegeneinander erzeugt wird. Bei niedrigen Drehgeschwindigkeiten befinden sich die Gleitlagerringe jeweils in einer zurückgezogenen Ruhestellung, in welcher im Wesentlichen keine Kräfte über die Gleitlagerringe aufgenommen werden. Bei höherer Drehgeschwindigkeit werden die Gleitlagerringe durch einen Aktuator an die gegenüberliegende Gleitfläche heranbewegt, so dass der Gleitlagerring und die Gleitfläche als hydrodynamisches Gleitlager wirken.

Bei der bekannten hybriden Lageranordnung mit mehreren Wälzlagern und mehreren hydrodynamischen Gleitlagern hat es sich als nachteilig herausgestellt, dass bei Stillstand und geringen Geschwindigkeiten keine Kräfte über die hydrodynamischen Gleitlager übertragen werden. In diesem Betriebszustand müssen sämtliche Kräfte von den Wälzlagern aufgenommen werden, was deren Lebensdauer verringert. Zudem ist die Tragfähigkeit im Stillstand und bei geringen Drehzahlen durch das nicht wirksame Gleitlager verringert. Wenn das hydrodynamische Gleitlager aktiviert ist, muss eine relativ hohe Drehgeschwindigkeit erreicht werden, um eine vollständige Trennung der Gleitringe von der gegenüberliegenden Gleitfläche zu erhalten. Bei niedrigen Drehzahlen ist die Lageranordnung hingegen anfällig für Verschleißerscheinungen.

Eine weitere hybride Lageranordnung ist aus der US 3 708 215 A bekannt. Diese Lageranordnung weist neben einem Wälzlager zusätzlich ein hydrostatisches Lager mit einem aktiven Schmiermittelkreislauf auf. Bei dieser Lageranordnung kann das Gleitlager zwar auch bei Stillstand und geringen Drehzahlen Kräfte aufnehmen, es können sich aber aufgrund in Umfangsrichtung verschiedener Belastungen unterschiedliche Schmierspaltbreiten ergeben, die den Durchsatz des Schmiermittels erhöhen. Ein weiterer Nachteil dieser hybriden Lageranordnung liegt darin, dass das Wälzlager und das Gleitlager voneinander getrennte Lagerringe aufweisen, wodurch die Steifigkeit der Lageranordnung derart herabgesetzt ist, dass die Anforderungen für die Lagerung von Rotorwellen von Windenergieanlagen nicht erfüllt werden können.

### Offenbarung der Erfindung

Vor diesem Hintergrund ist es Aufgabe der vorliegenden Erfindung, eine Lageranordnung anzugeben, die auch bei großen Belastungen über den gesamten Drehzahlbereich eine steife Lagerung mit hoher Lebensdauer und niedrigem Verschleiß ermöglicht und zusätzlich Dämpfung bereitstellt.

Zur Lösung der Aufgabe wird eine Lageranordnung gemäß Anspruch 1 mit einem ersten Lagerring, einem zweiten Lagerring und mindestens einer Wälzkörperreihe mit mehreren Wälzkörpern vorgeschlagen, die an einer ersten Laufbahn des ersten Lagerrings und an einer zweiten Laufbahn des zweiten Lagerrings abrollbar angeordnet sind, wobei an dem ersten Lagerring mindestens ein hydrostatisch abgestütztes erstes Gleitlagersegment angeordnet ist, das mit einer an dem zweiten Lagerring angeordneten ersten Gleitfläche zusammenwirkt.

Die erfindungsgemäße Lageranordnung stellt eine hybride Lageranordnung mit mindestens einem Wälzlager und mindestens einem hydrostatischen Gleitlager dar. Bei der erfindungsgemäßen Lageranordnung sind an dem ersten Lagerring sowohl die erste Laufbahn für die Wälzkörper der ersten Wälzkörperreihe als auch das mindestens eine Gleitlagersegment angeordnet. An dem zweiten Lagerring sind sowohl die zweite Laufbahn für die Wälzkörper als auch die Gleitfläche zum Zusammenwirken mit dem Gleitlagersegment vorgesehen. Insofern wird ein steifes Lager gebildet, bei welchem Kräfte über die Wälzkörper bzw. die hydrostatische Gleitlagerung zwischen dem ersten und dem zweiten Lagerring übertragbar sind. Das hydrostatische Gleitlagersegment kann auch bei Stillstand und bei geringen Drehzahlen der Lagerringe gegeneinander Kräfte zwischen den Lagerringen übertragen, so dass der Verschleiß des Wälzlagers reduziert und die Lebensdauer der Lageranordnung erhöht wird. Ferner kann durch das hydrostatisch abgestützte Gleitlagersegment sowohl bei Stillstand als auch bei drehender Lageranordnung Dämpfung bereitgestellt werden.

Der erste Lagerring kann ein Innenring und der zweite Lagerring ein Außenring der Lageranordnung sein. Alternativ kann der erste Lagerring ein Außenring und der zweite Lagerring ein Innenring sein. Entweder der erste Lagerring oder der zweite Lagerring kann als geteilter Lagerring mit mehreren Lagerringteilen ausgebildet sein, um die Montage der Lageranordnung zu vereinfachen. Beispielsweise kann der zweite Lagerring einstückig ausgebildet sein und der erste Lagerring in einer axialen Richtung, also in einer Richtung parallel zur Drehachse, geteilt sein. Alternativ kann der erste Lagerring einstückig ausgebildet sein und der zweite Lagerring in axialer Richtung geteilt sein.

Gemäß einer bevorzugten Ausgestaltung der Erfindung sind an dem ersten Lagerring mehrere hydrostatisch abgestützte erste Gleitlagersegmente angeordnet, die in einer Umfangsrichtung des ersten Lagerrings voneinander beabstandet sind und mit einer an dem zweiten Lagerring angeordneten ersten Gleitfläche zusammenwirken. Durch die mehreren, entlang der Umfangsrichtung des ersten Lagerrings voneinander beabstandet angeordneten Gleitlagersegmente kann sich der die Lagerringe trennende Schmiermittelspalt an den Gleitlagersegmenten individuell einstellen. Es ist daher möglich, einer durch eine unsymmetrische Belastung entstehende, unterschiedliche Breite des Schmierspalts in Umfangsrichtung entgegenzuwirken, so dass ein über die Umfangsrichtung möglichst gleichmäßiger Schmiermittelspalt mit reduziertem Schmiermitteldurchsatz erhalten wird. Besonders bevorzugt bilden die ersten Gleitlagersegmente eine in der Umfangsrichtung verlaufende erste Gleitlagersegmentreihe, wobei die ersten Gleitlagersegmente mit derselben Gleitfläche zusammenwirken. Bevorzugt sind sämtliche erste Gleitlagersegmente identisch ausgebildet. Alternativ können die ersten Gleitlagersegmente unterschiedlich ausgebildet sein. Beispielsweise können die ersten Gleitlagersegmente unterschiedliche Querschnitte aufweisen und/oder unterschiedlich große, gegenüber der Gleitfläche wirksame Oberflächen.

Bevorzugt erstreckt sich das erste Gleitlagersegment nicht über den gesamten Umfang des ersten Lagerrings. Das bedeutet, dass sich das erste Gleitlagersegment in Umfangsrichtung des ersten Lagerrings bevorzugt nicht über den gesamten ersten Lagerring erstreckt.

Gemäß einer bevorzugten Ausgestaltung der Erfindung ist das erste oder die ersten Gleitlagersegmente in einer senkrecht zu der ersten Gleitfläche angeordneten Bewegungsrichtung bewegbar gelagert, so dass der Schmiermittelspalt zwischen dem ersten Gleitlagersegment und der Gleitfläche durch eine Bewegung entlang der Bewegungsrichtung eingestellt werden kann, insbesondere selbsttätig eingestellt werden kann.

Die Erfindung sieht vor, dass das erste oder die ersten Gleitlagersegmente in einer Bewegungsrichtung bewegbar und um eine Kippachse kippbar gelagert sind, welche senkrecht zu der Bewegungsrichtung ausgerichtet ist. Die Bewegungsrichtung kann die axiale Richtung, die radiale Richtung oder eine Richtung sein, die sich quer zur axialen und quer zur radialen Richtung erstreckt. Bei einer derartigen Ausgestaltung sind das erste oder die ersten Gleitlagersegmente in mehreren Freiheitsgraden beweglich, so dass eine gleichzeitige Einstellung des Schmiermittelspalts zwischen dem Gleitlagersegment und der Gleitfläche in mehreren Raumrichtungen ermöglicht wird. Bevorzugt ist das erste oder die ersten Gleitlagersegmente in einer Bewegungsrichtung bewegbar und um mehrere Kippachsen kippbar gelagert, welche senkrecht zu der Bewegungsrichtung ausgerichtet sind.

Gemäß einer vorteilhaften Ausgestaltung ist vorgesehen, dass die ersten Gleitlagersegmente entlang der Umfangsrichtung im Wesentlichen gleichmäßig über den gesamten ersten Lagerring verteilt angeordnet sind. Insofern können die ersten Gleitlagersegmente eine Gleitlagersegmentreihe bilden, welche sich in Umfangsrichtung um den gesamten ersten Lagerring erstreckt. Bevorzugt weisen die ersten Gleitlagersegmente jeweils einen identischen Abstand zueinander auf.

Gemäß einer alternativ bevorzugten Ausgestaltung sind die Gleitlagersegmente entlang der Umfangsrichtung im Wesentlichen ungleichmäßig über den gesamten ersten Lagerring verteilt angeordnet. Eine derartige Ausgestaltung ermöglicht bei stationärer Anordnung des ersten Lagerrings eine Anpassung an zu erwartende unsymmetrische Krafteinwirkungen. Zudem kann der Material- und Wartungsaufwand sowie der Schmiermitteldurchsatz für die hydrostatische Lagerung weiter reduziert werden. Besonders bevorzugt ist es, wenn der erste Lagerring entlang der Umfangsrichtung einen ersten kreisringsegmentförmigen Bereich mit mehreren ersten Gleitlagersegmenten aufweist und einen zweiten kreisringsegmentförmigen Bereich, in welchem keine Gleitlagersegmente angeordnet sind, insbesondere wobei der erste und der zweite kreisringförmige Bereich eine identische Größe aufweisen. Beispielsweise können an solchen Stellen entlang der Umfangsrichtung, die einer erhöhten Krafteinwirkung, z.B. Gewichtskrafteinwirkung, ausgesetzt sind, ein erster kreisringsegmentförmiger Bereich mit mehreren ersten Gleitlagersegmenten angeordnet sein und an solchen Stellen entlang der Umfangsrichtung, die nicht einer erhöhten Krafteinwirkung ausgesetzt sind, ein zweiter kreisringsegmentförmiger Bereich, in welchem keine Gleitlagersegmente angeordnet sind. An den Stellen, die nicht einer erhöhten Krafteinwirkung ausgesetzt sind, können Kräfte über die Wälzkörper aufgenommen werden.

Gemäß einer vorteilhaften Ausgestaltung ist an dem ersten Lagerring mindestens ein hydrostatisch abgestütztes zweites Gleitlagersegment angeordnet, das mit einer an dem zweiten Lagerring angeordneten zweiten Gleitfläche zusammenwirkt. Bevorzugt ist die zweite Gleitfläche in axialer Richtung von der ersten Gleitfläche beabstandet.

Eine vorteilhafte Ausgestaltung sieht vor, dass an dem ersten Lagerring mehrere hydrostatisch abgestützte zweite Gleitlagersegmente angeordnet sind, die in einer Umfangsrichtung des ersten Lagerrings voneinander beabstandet sind und mit einer an dem zweiten Lagerring angeordneten zweiten Gleitfläche zusammenwirken. Bevorzugt bilden die zweiten Gleitlagersegmente eine in der Umfangsrichtung verlaufende zweite Gleitlagersegmentreihe, wobei die zweite Gleitlagersegmentreihe in einer parallel zu einer Drehachse der Lageranordnung verlaufenden axialen Richtung voneinander beabstandet sind. Bevorzugt wirken die zweiten Gleitlagersegmente mit derselben zweiten Gleitfläche zusammen. Besonders bevorzugt sind sämtliche zweite Gleitlagersegmente identisch ausgebildet. Vorteilhaft ist es, wenn die ersten Gleitlagersegmente und die zweiten Gleitlagersegmente identisch ausgebildet sind. Optional kann eine dritte Gleitlagersegmentreihe mit dritten Gleitlagersegmenten oder weitere Gleitlagersegmentreihen mit entsprechenden Gleitlagersegmenten vorgesehen sein.

In diesem Zusammenhang ist es vorteilhaft, wenn die ersten Gleitlagersegmente und die zweiten Gleitlagersegmente hinsichtlich einer senkrecht zu einer Drehachse der Lageranordnung angeordneten Radialebene asymmetrisch angeordnet sind. Eine derartige Ausgestaltung ermöglicht bei stationärer Anordnung des ersten Lagerrings eine nochmals verbesserte Anpassung an zu erwartende unsymmetrische Krafteinwirkungen. Bevorzugt ist es, wenn die erste Gleitlagersegmentreihe einen ersten kreisringsegmentförmigen Bereich mit mehreren ersten Gleitlagersegmenten aufweist und einen zweiten kreisringsegmentförmigen Bereich, in welchem keine ersten Gleitlagersegmente angeordnet sind, und die zweite Gleitlagersegmentreihe einen dritten kreisringsegmentförmigen Bereich, der mehrere zweite Gleitlagersegmente aufweist, und einen vierten kreisringsegmentförmigen Bereich aufweist, in welchem keine zweiten Gleitlagersegmente angeordnet sind, wobei der erste kreisringsegmentförmige Bereich und der dritte kreisringsegmentförmige Bereich nicht symmetrisch bezüglich der Radialebene angeordnet sind. Alternativ ist es möglich, dass die zweiten Gleitlagersegmente gegenüber den ersten Gleitlagersegmenten einen Versatz in Umfangsrichtung aufweisen.

Gemäß einer vorteilhaften Ausgestaltung ist der erste Lagerring als feststehender Lagerring ausgebildet und der zweite Lagerring ist gegenüber dem ersten Lagerring drehbar.

Die erste Gleitfläche und/oder die zweite Gleitfläche ist bevorzugt zylinderringförmig ausgestaltet.

Das erste Gleitlagersegment und/oder das zweite Gleitlagersegment weist bevorzugt einen kreisrunden Querschnitt auf. Die erste Druckfläche und/oder die zweite Druckfläche des entsprechenden Gleitlagersegments können insofern kreisförmig sein. Alternativ kann das erste Gleitlagersegment und/oder das zweite Gleitlagersegment einen elliptischen oder eckigen, beispielsweise drei-, vier- oder mehreckigen, Querschnitt aufweisen.

Gemäß einer vorteilhaften Ausgestaltung ist das erste Gleitlagersegment und/oder das zweite Gleitlagersegment aus Bronze gebildet. Alternativ kann das erste und/oder zweite Gleitlagersegment eine Beschichtung aus Weißmetall aufweisen.

Bevorzugt sind die Wälzkörper als Kegelrollen ausgebildet. Alternativ können die Wälzkörper als Kugeln, Zylinderrollen, Tonnenrollen oder Toroidalrollen ausgebildet sein. Die Lageranordnung kann optional mehrere Wälzkörperreihen - jeweils mit mehreren Wälzkörpern - aufweisen, die an weiteren Laufbahnen des ersten Lagerrings und an weiteren Laufbahnen des zweiten Lagerrings abrollbar angeordnet sind. Bevorzugt sind die Wälzkörperreihen derart angeordnet, dass die Lageranordnung ein Axial-Radial-Lager bildet, welches sowohl Kräfte in axialer Richtung als auch in radialer Richtung aufnehmen kann. Bevorzugt sind die Drehachsen der Wälzkörper der Wälzkörperreihen sowohl gegenüber der axialen Richtung als auch gegenüber der radialen Richtung geneigt angeordnet, so dass die Wälzkörper Kräfte in radialer Richtung und axiale Richtung aufnehmen können. Alternativ können die Drehachsen der Wälzkörper einer ersten Wälzkörperreihe in axialer Richtung und die Drehachsen der Wälzkörper einer zweiten Wälzkörperreihe in radialer Richtung ausgerichtet sein.

Bevorzugt sind die Wälzkörperlaufbahnen gehärtet, vorzugsweise induktiv gehärtet. Die Gleitflächen für die hydrostatischen Elemente können gehärtet oder ungehärtet sein.

Gemäß einer vorteilhaften Ausgestaltung der Erfindung ist mindestens ein erstes Gleitlagersegment, bevorzugt alle ersten Gleitlagersegmente, derart in einer Aufnahmetasche des ersten Lagerrings aufgenommen, dass zwischen dem ersten Lagerring und dem ersten Gleitlagersegment ein erster Druckraum gebildet ist und das erste Gleitlagersegment derart ausgebildet ist, dass zwischen dem ersten Gleitlagersegment und dem zweiten Lagerring ein zweiter Druckraum gebildet ist, wobei der erste Druckraum und der zweite Druckraum über einen durch das erste Gleitlagersegment verlaufenden Kanal verbunden sind. Durch Einleiten eines Schmiermittels in den ersten Druckraum kann in dem ersten Druckraum ein Druck erzeugt, werden, der das erste Gleitlagersegment in Richtung der ersten Gleitfläche des zweiten Lagerrings drückt und als Feder-Dämpfer-System wirkt. Zwischen dem ersten Gleitlagersegment und dem zweiten Lagerring, insbesondere der Gleitfläche des zweiten Lagerrings, wird ein zweiter Druckraum gebildet, in welchem sich ein Schmiermittelfilm mit einer Schmierspaltbreite ausbilden kann. Der erste und der zweite Druckraum sind über einen durch das erste Gleitlagersegment verlaufenden Kanal verbunden, so dass der zweite Druckraum über den Kanal mit Schmiermittel versorgt werden kann. Über den Kanal kann ein Druckausgleich zwischen dem ersten Druckraum und dem zweiten Druckraum erfolgen. Es ist nicht erforderlich, separate Federn zur elastischen Lagerung der ersten Gleitlagersegmente vorzusehen. Es ergibt sich ein geringerer Montage- und Wartungsaufwand.

Gemäß einer vorteilhaften Ausgestaltung der Erfindung weist das erste Gleitlagersegment eine erste Druckfläche auf, die dem ersten Druckraum zugewandt ist und eine zweite Druckfläche, die dem zweiten Druckraum zugewandt ist, wobei die erste Druckfläche kleiner als die zweite Druckfläche ist. Bei gleichem Druck in dem ersten und dem zweiten Druckraum kann durch eine derartige Dimensionierung der Druckflächen erreicht werden, dass die auf die zweite Druckfläche wirkende Kraft größer ist als die Kraft, die auf die erste Druckfläche wirkt. Das Gleitlagersegment wird daher selbsttätig von der Gleitfläche des zweiten Lagerrings weggedrückt, wodurch der Druck im zweiten Druckraum durch ablaufendes Schmiermittel abnimmt bis ein Kraftgleichgewicht zwischen den beiden Kräften erreicht ist. Das Gleitlagersegment kann in dem Gleichgewichtszustand eine Stellung einnehmen, in welcher ein ausreichender Schmiermittelspalt zwischen dem Gleitlagersegment und der Gleitfläche vorhanden ist. Hierdurch kann verhindert werden, dass das Gleitlagersegment in unerwünschte Anlage mit der Gleitfläche an dem zweiten Lagerring kommt, so dass ein verschleißfreier Betrieb ermöglicht wird. Eine derartige Ausgestaltung ist für große Lageranordnungen, insbesondere mit einem Durchmesser im Bereich von 1 m bis 10 m, vorteilhaft. Bei großen Lageranordnungen variiert oftmals die Breite des Schmiermittelspalts in Umfangsrichtung aufgrund von Fertigungsabweichungen oder belastungsabhängigen Verformungen. Durch das sich selbsttätig in den Gleichgewichtszustand bringende Gleitlagersegment kann die Funktionsfähigkeit derartiger Lageranordnungen gewährleistet werden.

Anstelle eines einzigen zweiten Druckraums können auch mehrere zweite Druckräume vorgesehen sein. Bei Ausgestaltungen der Erfindung mit mehreren zweiten Druckräumen ist die Summe der Druckflächen der mehreren zweiten Druckräume bevorzugt größer als die erste Druckfläche.

Das Verhältnis der ersten Druckfläche zu der zweiten Druckfläche bzw. zu der Summe der mehreren zweiten Druckflächen beträgt weniger als 1 und liegt bevorzugt im Bereich zwischen 0,5 und 1, besonders bevorzugt im Bereich zwischen 0,7 und 1.

Bevorzugt ist die zweite Druckfläche des ersten Gleitlagersegments durch einen Randvorsprung begrenzt, so dass ein seitliches Ausfließen des Schmiermittels aus der zweiten Druckkammer gehemmt wird. Der Randvorsprung kann vollständig um die Druckfläche umlaufend angeordnet sein. Bevorzugt weist der Randvorsprung eine Krümmung auf, deren Verlauf an die Krümmung der Gleitfläche des zweiten Lagerrings angepasst ist. Besonders bevorzugt, sind die Krümmung des Randvorsprungs und der Gleitfläche identisch, so dass der Randvorsprung bei Stillstand der Lageranordnung an der Gleitfläche anliegt.

Gemäß einer vorteilhaften Ausgestaltung der Erfindung ist in dem Kanal eine Querschnittsverengung, insbesondere eine Strömungsdrossel, angeordnet. Über die Querschnittsverengung kann der Austausch von Schmiermittel zwischen der ersten Druckkammer und der zweiten Druckkammer, d.h. zwischen der Vorder- und der Rückseite des Gleitlagerelements, eingestellt werden. Bevorzugt ist die Querschnittsverengung derart ausgebildet, dass zwischen dem Gleitlagersegment und der Gleitfläche des zweiten Lagerrings ein ausreichend bemessener Schmiermittelspalt vorhanden ist. Bei der Querschnittsverengung handelt es sich bevorzugt um eine Kapillardrossel oder eine Ringspaltdrossel.

Vorteilhaft ist es, wenn zwischen dem ersten Gleitlagersegment und dem ersten Lagerring, insbesondere der Aufnahmetasche, ein Dichtelement angeordnet ist, so dass ein unerwünschtes Ausströmen von Schmiermittel aus der ersten Druckkammer, d.h. von der Rückseite des Gleitlagersegments um dieses herum, verhindert werden kann. Durch das Dichtelement kann erreicht werden, dass ein Austausch von Schmiermittel im Wesentlichen, bevorzugt ausschließlich, über den Kanal des Gleitlagersegments erfolgen kann.

Gemäß einer vorteilhaften Ausgestaltung ist vorgesehen, dass das erste Gleitlagersegment derart ausgebildet ist, dass zwischen dem ersten Gleitlagersegment und dem zweiten Lagerring mehrere, insbesondere drei oder vier, zweite Druckräume gebildet sind, wobei der erste Druckraum und die mehreren zweiten Druckräume über mehrere durch das erste Gleitlagersegment verlaufende Kanäle verbunden sind. Das Gleitlagersegment kann auf seiner der Gleitfläche des zweiten Lagerrings zugewandten Seite mehrere Vorsprünge aufweisen, die seitliche Begrenzungen für mehrere, insbesondere drei oder vier, zweite Druckräume bilden. Durch die mehreren, zwischen dem ersten Gleitlagersegment und dem zweiten Lagerring gebildeten, zweiten Druckräume kann ein unerwünschtes Verkippen des Gleitlagersegments gegenüber dem zweiten Lagerring verringert werden. Das bedeutet, dass auch bei einem Störfall in der Druckversorgung, beispielsweise einem Druckabfall, eine Berührung des zweiten Lagerrings durch ein verkipptes Gleitlagersegment verhindert werden kann.

In diesem Zusammenhang ist es bevorzugt, dass in jedem Kanal eine Querschnittsverengung, insbesondere eine Strömungsdrossel, angeordnet ist, so dass der Austausch von Schmiermittel zwischen der ersten Druckkammer und den anderen, insbesondere einer zweiten, dritten, vierten und fünften Druckkammer, eingestellt werden kann. Bevorzugt sind die Querschnittsverengungen derart ausgebildet, dass zwischen dem Gleitlagersegment und der Gleitfläche des zweiten Lagerrings ein ausreichend bemessener Schmiermittelspalt vorhanden ist. Die Querschnittsverengungen können unterschiedlich ausgebildet sein.

Ein weiterer Gegenstand der Erfindung ist eine Windenergieanlage mit einer Rotorwelle, wobei die Rotorwelle über eine vorstehend beschriebene Lageranordnung gelagert ist. Der erste Lagerring der Lageranordnung ist bevorzugt als feststehender Lagerring ausgebildet. Beispielsweise kann der erste Lagerring mit einer Tragstruktur der Windenergieanlage, beispielsweise mit einer Gondel einer Windenergieanlage, verbunden sein. Der zweite Lagerring ist bevorzugt drehfest mit der Rotorwelle verbunden.

Ein weiterer Gegenstand der Erfindung ist eine Werkzeugmaschine mit einem Drehtisch, wobei der Drehtisch über eine vorstehend beschriebene Lageranordnung gelagert ist. Der erste Lagerring der Lageranordnung ist bevorzugt als feststehender Lagerring ausgebildet. Beispielsweise kann der erste Lagerring mit einer Tragstruktur der Werkzeugmaschine verbunden sein. Der zweite Lagerring ist bevorzugt drehfest mit dem Drehtisch verbunden.

Ein weiterer Gegenstand der Erfindung ist eine Sende- und/oder Empfangseinrichtung mit einer feststehenden Basis und einer gegenüber der Basis drehbaren Antenne, wobei die Antenne über eine vorstehend beschriebene Lageranordnung an der Basis gelagert ist. Der erste Lagerring der Lageranordnung ist bevorzugt als feststehender Lagerring ausgebildet. Beispielsweise kann der erste Lagerring mit der Basis der Sende- und/oder Empfangseinrichtung verbunden sein. Der zweite Lagerring ist bevorzugt drehfest mit der Antenne verbunden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Figur 1** zeigt ein Ausführungsbeispiel einer Windenenergieanlage gemäß der Erfindung.
Die **Figur 2** zeigt ein erstes Ausführungsbeispiel einer Lageranordnung gemäß der Erfindung in einer Schnittdarstellung entlang einer die Drehachse einschließenden Axialebene.
Die **Figur 3** zeigt ein Detail der Darstellung aus Figur 2.
Die **Figur 4** zeigt eine Schnittdarstellung entlang der in Figur 2 gezeigten Radialebene IV-IV.
Die **Figur 5** zeigt das in Figur 4 markierte Detail V.
Die **Figur 6** zeigt ein zweites Ausführungsbeispiel einer Lageranordnung gemäß der Erfindung in einer Schnittdarstellung entlang einer die Drehachse einschließenden Axialebene.
Die **Figur 7** zeigt ein Detail der Darstellung aus Figur 6.
Die **Figur 8** zeigt ein Gleitlagersegment gemäß einem ersten Ausführungsbeispiel in einer Aufnahmetasche in einer Schnittdarstellung.
Die **Figur 9** zeigt das Gleitlagersegment nach Figur 8 in einer Schnittdarstellung.
Die **Figur 10** zeigt das Gleitlagersegment nach Figur 8 in einer perspektivischen Darstellung.
Die **Figur 11** zeigt ein Gleitlagersegment gemäß einem zweiten Ausführungsbeispiel in einer perspektivischen Darstellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

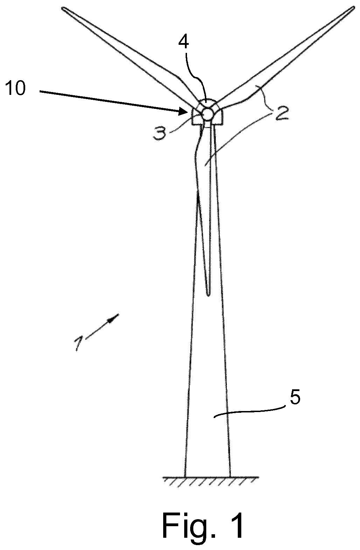

In der **Figur 1** ist eine Windenergieanlage 1 gezeigt, die einen Turm 5 und eine gegenüber dem Turm 5 drehbar angeordneten Gondel 4 aufweist. An der Gondel 4 ist ein Rotor 3 mit einer Rotorwelle drehbar gelagert. Die Rotorwelle ist über eine erfindungsgemäße Lageranordnung 10 gelagert. Hierbei ist ein erster Lagerring 11 der Lageranordnung 10 als feststehender Lagerring ausgebildet. Ein zweiter Lagerring 12. Welcher gegenüber dem ersten Lagerring 10 drehbar ist, ist drehfest mit der Rotorwelle verbunden. An dem Rotor 3 sind mehrere Rotorblätter 2 vorgesehen.

Die Lageranordnung 10 ist als Großwälzlager mit einem Durchmesser im Bereich von 1 m bis 10 m, bevorzugt von 3 m bis 7 m, besonders bevorzugt von 4 m bis 6 m, beispielsweise 2,5 m ausgebildet. Nachfolgend sollen verschiedene Ausführungsbeispiele von Lageranordnungen 10 beschrieben werden, welche den Rotor 3 drehbar mit der Gondel 4 verbinden.

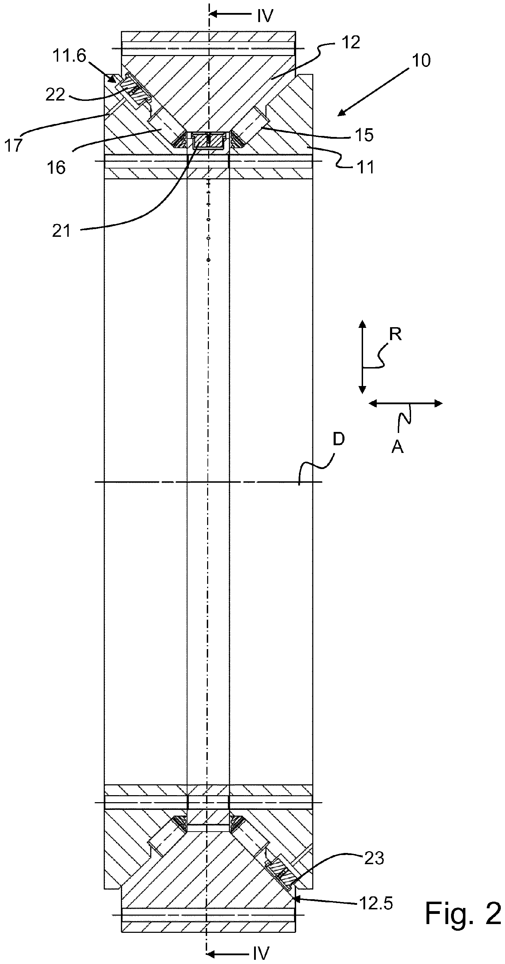

Die **Figuren 2 bis 5** zeigen ein erstes Ausführungsbeispiel einer erfindungsgemäßen Lageranordnung 10 mit einem ersten, feststehenden Lagerring 11, der als Innenring ausgebildet ist. Um die Montage der Lageranordnung 10 zu vereinfachen, ist der erste Lagerring als in axialer Richtung A geteilter Lagerring ausgebildet und weist mehrere Lagerteile 11.1, 11.2, 11.3 auf. Ferner weist die Lageranordnung 10 einen als Außenring ausgebildeten zweiten Lagerring 12 auf, welcher gegenüber dem ersten Lagerring 11 um eine Drehachse D drehbar gelagert ist. Der zweite Lagerring 12 umgibt den ersten Lagerring 11 konzentrisch. Zwischen den Lagerringen 11, 12 sind zwei Wälzlagerreihen 13, 14 angeordnet. Jede der Wälzlagerreihen 13, 14 weist mehrere Wälzkörper 15, 16 auf, die zueinander beabstandet angeordnet sind. Der Abstand zwischen den Wälzkörpern kann durch in den Zeichnungen nicht dargestellte Distanzstücke oder einen Käfig eingestellt werden. Die Wälzkörper 15, 16 der Wälzkörperreihen 13, 14 sind derart angeordnet, dass sie an einer ersten Laufbahn 11.4, 11.5 des ersten Lagerrings 11 und an einer zweiten Laufbahn 12.1, 12.2 des zweiten Lagerrings 12 abrollbar angeordnet sind. Bei den Wälzkörpern 15, 16 der Wälzkörperreihen 13, 14 handelt es sich um Kegelrollen. Die Wälzkörper 15, 16 der Wälzkörperreihen sind identisch ausgebildet. Die Wälzkörperreihen 13, 14 sind derart angeordnet, dass die Lageranordnung ein Axial-Radial-Lager bildet, welches sowohl Kräfte in axialer Richtung A als auch in radialer Richtung R aufnehmen kann. Gemäß dem Ausführungsbeispiel sind die Drehachsen der Wälzkörper 15, 16 sowohl gegenüber der axialen Richtung A als auch gegenüber der radialen Richtung geneigt angeordnet.

Bei der Lageranordnung 10 handelt es sich um eine Hybrid-Lageranordnung, welche zusätzlich zu den Wälzkörperreihen 13, 14 mehrere aus Gleitlagersegmenten 21, 22, 23 gebildete Gleitlagersegmentreihen aufweist, wobei sowohl die Wälzkörper 15, 16 als auch die Gleitlagersegmente mit dem zweiten Lagerring 12 zusammenwirken. Eine erste Gleitlagersegmentreihe ist aus mehreren an dem ersten Lagerring 11 angeordneten, hydrostatisch abgestützten ersten Gleitlagersegmenten 21 gebildet, die in einer Umfangsrichtung des ersten Lagerrings 11 voneinander beabstandet sind. Die ersten Gleitlagersegmente 21 wirken mit einer an dem zweiten Lagerring 12 angeordneten ersten Gleitfläche 12.3 zusammen, wobei zwischen den ersten Gleitlagersegmenten 21 und der ersten Gleitfläche 12.3 ein Schmierspalt ausgebildet ist, der mit einem Schmiermittel, beispielsweise einem Öl, gefüllt ist. Die erste Gleitfläche 12.3 ist zylinderringförmig ausgestaltet. Das Schmiermittel wird aktiv über eine Schmiermittelversorgung, beispielsweise eine Ölpumpe, zugeführt. Die Zuführung des Schmiermittels erfolgt über einen Zuführkanal 17 in dem ersten Lagerring 11 der in einer Aufnahmetasche 11.6 in des ersten Lagerrings 1 mündet. Die hydrostatischen Gleitlagersegmente 21 übertragen auch bei Stillstand oder bei geringen Drehzahlen der Lagerringe 11, 12 Kräfte zwischen den Lagerringen 11, 12. Da entlang der Umfangsrichtung mehrere beabstandet angeordnete Gleitlagersegmente 21 angeordnet sind, kann sich der Schmiermittelspalt an den Gleitlagersegmente individuell einstellen, so dass ein über die Umfangsrichtung vergleichmäßigter Schmiermittelspalt mit reduziertem Schmiermitteldurchsatz erhalten wird.

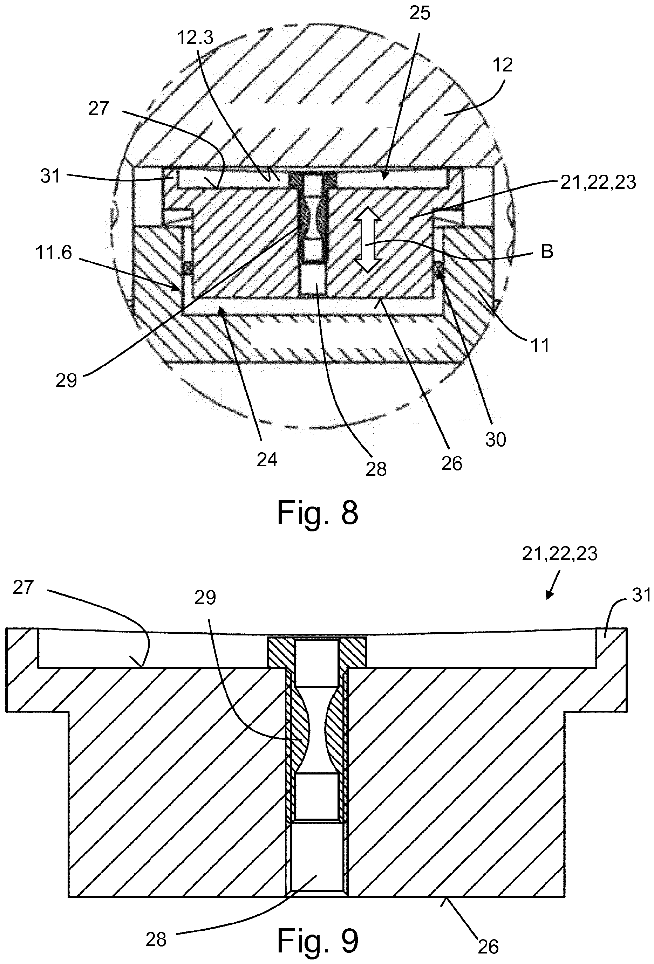

Anhand der in **Figur 8** exemplarisch gezeigten Ausgestaltung eines Gleitlagersegments 21, 22, 23 soll nachfolgend eine mögliche Ausgestaltung des ersten Gleitlagersegments 21 erläutert werden. Die ersten Gleitlagersegmente 21 sind derart in der Aufnahmetasche 11.6 des ersten Lagerrings 11 aufgenommen, dass zwischen dem ersten Lagerring 1 und dem jeweiligen ersten Gleitlagersegment 21 ein erster Druckraum 24 gebildet ist. Ferner ist das erste Gleitlagersegment 21 derart ausgebildet, dass zwischen dem ersten Gleitlagersegment 21 und dem zweiten Lagerring 12 ein zweiter Druckraum 25 gebildet ist. Der zweite Druckraum wird durch die zweite Druckfläche 27 des Gleitlagersegments 21, einen um die zweite Druckfläche 27 umlaufenden Randvorsprung 31 sowie die Gleitfläche 12.3 an dem zweiten Lagerring 12 begrenzt. Der erste Druckraum 24 und der zweite Druckraum 25 sind über einen durch das erste Gleitlagersegment verlaufenden Kanal 28 verbunden, so dass ein Schmiermittelaustausch zwischen der Vorderseite und der Rückseite des ersten Gleitlagersegments 21 möglich ist. Zwischen dem ersten Gleitlagersegment 21 und dem ersten Lagerring 11 ist ein Dichtelement 30 angeordnet. Das Dichtelement 30 liegt an einer Innenkontur der Aufnahmetasche 11.6 an und verhindert ein unerwünschtes Ausströmen von Schmiermittel aus dem ersten Druckraum 24. Insofern ist ein Austausch von Schmiermittel zwischen dem ersten Druckraum 24 und dem zweiten Druckraum 25 ausschließlich über den Kanal 28 des ersten Gleitlagersegments 21 möglich. In dem Kanal 28 ist eine als Strömungsdrossel ausgebildete Querschnittsverengung 29 angeordnet.

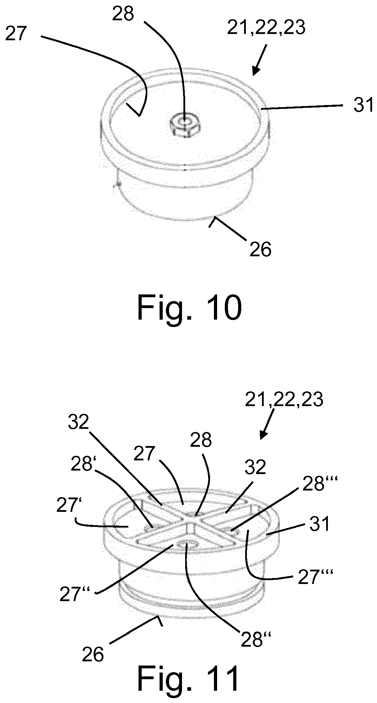

An seiner Rückseite weist das erste Gleitlagersegment 21 eine erste Druckfläche 26 auf, welche dem ersten Druckraum 24 zugewandt ist. An der Vorderseite des ersten Gleitlagersegments ist eine zweite Druckfläche 27 vorgesehen, die dem zweiten Druckraum 25 zugewandt ist. Wie anhand der Darstellung in den **Figuren 9** **und** **10** erkennbar wird, ist die erste Druckfläche 26 kleiner als die zweite Druckfläche 27. Über den Kanal 28 kann ein Druckausgleich zwischen dem ersten und dem zweiten Druckraum 24, 25 erfolgen, so dass ein im Wesentlichen identischer Druck in dem ersten und dem zweiten Druckraum 24, 25 herrscht. Durch die Dimensionierung der Druckflächen 26, 27 wird nun erreicht, dass die auf die zweite Druckfläche 27 wirkende Kraft größer ist als die Kraft, die auf die erste Druckfläche 26 wirkt. Das erste Gleitlagersegment 21 wird daher selbststätig von der Gleitfläche 12.3 des zweiten Lagerrings 12 weggedrückt, wodurch der Druck im zweiten Druckraum 25 durch ablaufendes Schmiermittel abnimmt bis ein Kraftgleichgewicht zwischen den beiden Kräften erreicht ist. Insofern wird das Gleitlagersegment in einer Bewegungsrichtung B bewegt, die senkrecht zu der Gleitfläche 12.3 ausgerichtet ist. Das Gleitlagersegment 21 kann in dem Gleichgewichtszustand eine Stellung einnehmen, in welcher ein ausreichender Schmiermittelspalt zwischen dem Gleitlagersegment und der Gleitfläche vorhanden ist. Hierdurch wird verhindert, dass das Gleitlagersegment 21 in unerwünschte Anlage mit der Gleitfläche 12.3 an dem zweiten Lagerring 12 kommt, so dass ein verschleißfreier Betrieb ermöglicht wird. Die Lage des Gleitlagersegments 21 im Gleichgewichtszustand und/oder die Breite des Schmiermittelspalts kann durch die Einstellung des Schmiermittelstrom durch die Zuführung 17, die Wahl einer geeigneten Querschnittsverengung 29 sowie das Verhältnis der Druckflächen 26, 27 zueinander beeinflusst werden.

Anstelle eines einzigen zweiten Druckraums 25 können auch mehrere zweite Druckräume vorgesehen sein (vgl. Fig. 11). Bei Ausgestaltungen der Erfindung mit mehreren zweiten Druckräumen ist die Summe der Druckflächen der mehreren zweiten Druckräume bevorzugt größer als die erste Druckfläche 26.

Das Verhältnis der ersten Druckfläche 26 zu der zweiten Druckfläche 27 bzw. zu der Summe der mehreren zweiten Druckflächen beträgt weniger als 1 und liegt bevorzugt im Bereich zwischen 0,5 und 1, besonders bevorzugt im Bereich zwischen 0,7 und 1

Das in den **Figuren 8, 9** **und** **10** gezeigte Gleitlagersegment 21 weist einen kreisförmigen Querschnitt auf, d.h. dass die erste und zweite Druckfläche 26, 27 kreisförmig ist. In Abweichung von dieser Ausgestaltung kann das Gleitlagersegment 21 einen anderen Querschnitt aufweisen, beispielsweise einen drei-, vier- oder mehreckigen Querschnitt.

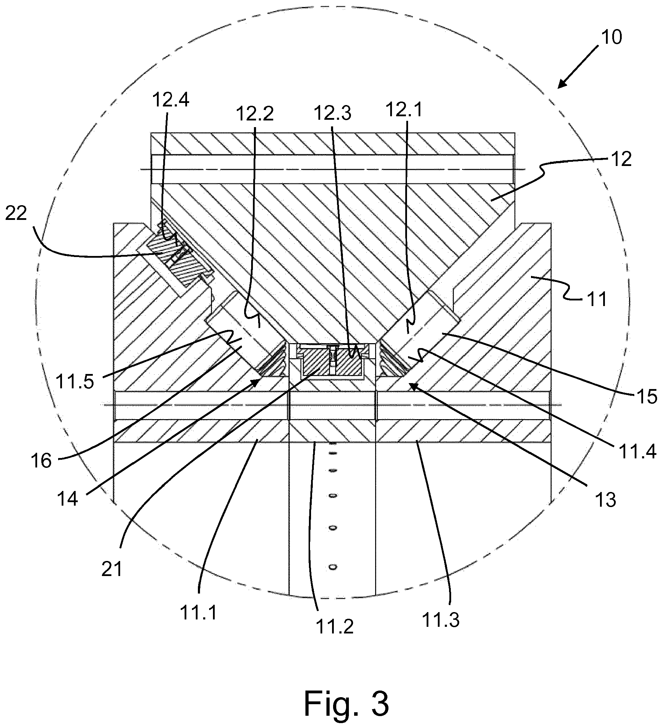

Wie der Darstellung in den **Figuren 2** **und** **3** weiter entnommen werden kann, sind die Laufbahnen 12.1, 12.2 der Wälzkörperreihen 13, 14 in einem Winkel gegenüber einer Radialebene angeordnet, welcher im Bereich zwischen 0° und 90°, bevorzugt zwischen 30° und 60°, besonders bevorzugt zwischen 40° und 50°, beispielsweise bei 45° liegt. Die erste Gleitfläche 12.3 ist parallel zu der Drehachse D ausgerichtet, so dass über die ersten, hydrostatischen Gleitlagersegmente 21 im Wesentlichen in radialer Richtung R wirkende Kräfte übertragen werden.

Ferner sind an dem ersten Lagerring 11 mehrere hydrostatisch abgestützte, zweite Gleitlagersegmente 22 einer zweiten Gleitlagersegmentreihe sowie mehrere hydrostatisch abgestützte, dritte Gleitlagersegmente 23 einer dritten Gleitlagersegmentreihe angeordnet. Die erste Wälzkörperreihe 15 ist zwischen der ersten und dritten Gleitlagersegmentreihe und die zweite Wälzkörperreihe ist zwischen der ersten und der zweiten Gleitlagersegmentreihe angeordnet. Die zweiten und dritten Gleitlagersegmente 22, 23 sind bevorzugt identisch zu den erste Gleitlagersegmenten 21 ausgebildet, so dass die Ausführungen zu den **Figuren 8 bis 10** auch für diese Gleitlagersegmente gelten. Alternativ können die Gleitlagersegmente 21, 22, 23 der einzelnen Gleitlagersegmentreihen unterschiedlich ausgestaltet sein. Die zweiten Gleitlagersegmente 22 wirken mit einer zweiten Gleitfläche 12.4 zusammen, welche an dem zweiten Lagerring 12 vorgesehen ist. Die dritten Gleitlagersegmente 23 wirken mit einer dritten Gleitfläche 12.5 des zweiten Lagerrings 12 zusammen. Die zweite und die dritte Gleitfläche 12.4, 12.5 sind in einem Winkel gegenüber einer Radialebene angeordnet, welcher identisch zu dem Winkel ist, welchen die Laufbahnen 12,1, 12,2 gegenüber der Radialebene einschließen. Dieser Winkel liegt im Bereich zwischen 0° und 90°, bevorzugt zwischen 30° und 60°, besonders bevorzugt zwischen 40° und 50°, beispielsweise bei 45° liegt. Insofern weist der zweite Lagerring 12 einen im Wesentlichen V-förmigen oder trapezförmigen Querschnitt auf.

Bei dem ersten Ausführungsbeispiel sind ersten Gleitlagersegmente 21 in axialer Richtung R bewegbar gelagert so dass der Schmiermittelspalt zwischen dem Gleitlagersegment 21 und der Gleitfläche 12.3 durch eine Bewegung des Gleitlagersegments 21 entlang der Bewegungsrichtung eingestellt werden kann. Die Bewegungsrichtung ist senkrecht zu der ersten Gleitfläche 12.3 orientiert. Die zweiten Gleitlagersegmente 22 und die dritten Gleitlagersegmente 23 sind jeweils ebenfalls in einer senkrecht zu der jeweiligen Gleitfläche 12.4, 12.5 ausgerichteten Bewegungsrichtung bewegbar gelagert. Die Lagerung der Gleitlagersegmente 21, 22, 23 ermöglich ferner ein gewisses Verkippen der Gleitlagersegmente 21, 22, 23 um eine Kippachse, die senkrecht zu der jeweiligen Bewegungsrichtung ausgerichtet ist.

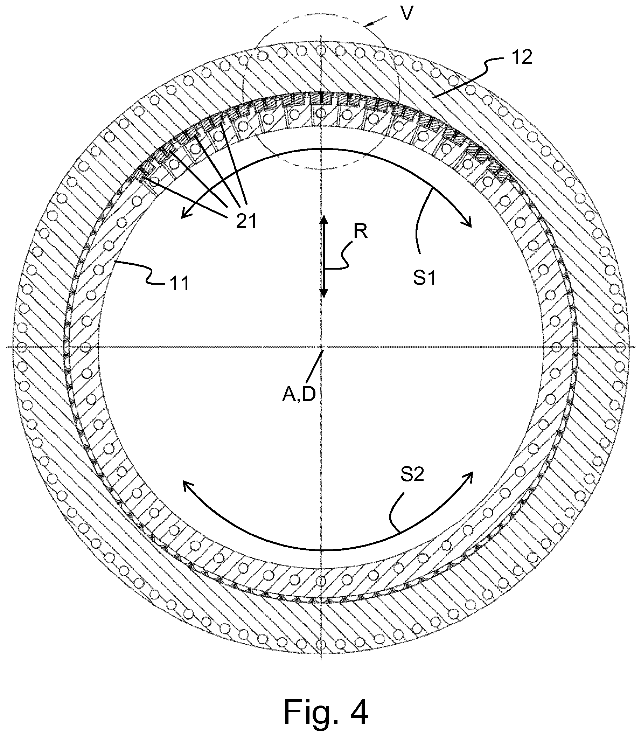

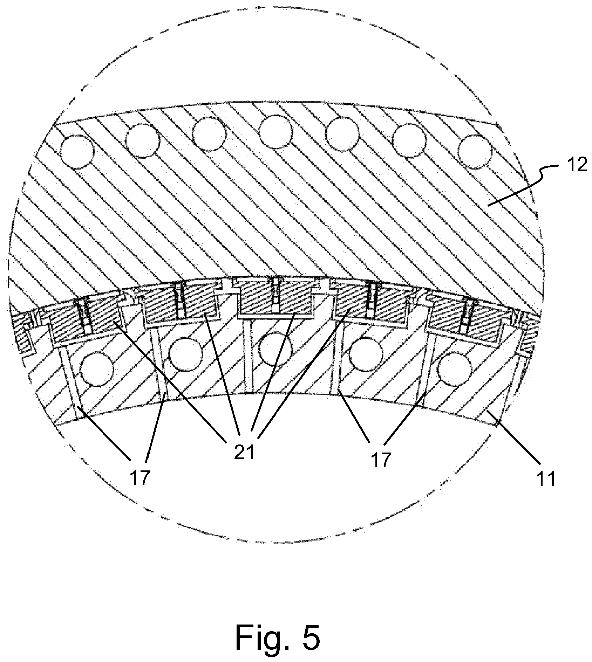

Wie in den Darstellungen in den **Figuren 4** **und** **5** gezeigt wird, sind die ersten Gleitlagersegmente 21 entlang der Umfangsrichtung des ersten Lagerrings 11 im Wesentlichen ungleichmäßig über den gesamten ersten Lagerring 11 verteilt angeordnet. Der erste Lagerring 11 weist entlang der Umfangsrichtung einen ersten, kreisringsegmentförmigen Bereich S1 mit mehreren ersten Gleitlagersegmenten 21 auf, der in Figur 4 oben gezeigt ist. Ferner ist ein zweiter, kreisringsegmentförmiger Bereich S2 vorgesehen, in welchem keine Gleitlagersegmente angeordnet sind. Der erste kreisringsegmentförmige Bereich S1 mit mehreren ersten Gleitlagersegmenten 21 ist bevorzugt in einem Abschnitt des ersten Lagerrings 11 angeordnet, in dem eine erhöhte Krafteinwirkung, z.B. Gewichtskrafteinwirkung, besteht.

Die Darstellung in **Figur 2** verdeutlicht, dass die zweiten Gleitlagersegmente 22 und die dritten Gleitlagersegmente 23 hinsichtlich einer senkrecht zu einer Drehachse der Lageranordnung angeordneten Radialebene asymmetrisch angeordnet sind. Eine derartige Ausgestaltung ermöglicht bei stationärer Anordnung des ersten Lagerrings 11 eine weitere Anpassung an zu erwartende unsymmetrische Krafteinwirkungen. Die zweite und die dritte Gleitlagersegmentreihe weisen jeweils einen ersten kreisringsegmentförmigen Bereich auf, in welchem mehrere Gleitlagersegmente 22, 23 angeordnet sind und einen zweiten kreisringsegmentförmigen Bereich, in welchem keine Gleitlagersegmente angeordnet. In der Darstellung in **Figur 2** ist der erste kreisringsegmentförmige Bereich der zweiten Gleitlagersegmentreihe oben und der erste kreisringsegmentförmige Bereich der dritten Gleitlagersegmentreihe unten angeordnet.

Die ersten Gleitlagersegmente 21 der ersten Gleitlagersegmentreihe sind entlang der Umfangsrichtung gleichmäßig über den gesamten ersten Lagerring verteilt angeordnet. Die erste Gleitlagersegmentreihe erstreckt sich in Umfangsrichtung also um den gesamten ersten Lagerring 11. Die ersten Gleitlagersegmente 21 sind jeweils in einem identischen Abstand zueinander angeordnet.

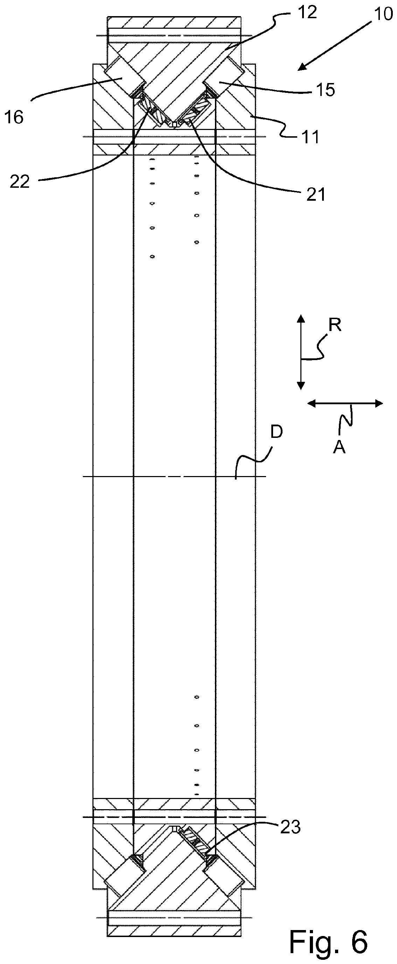

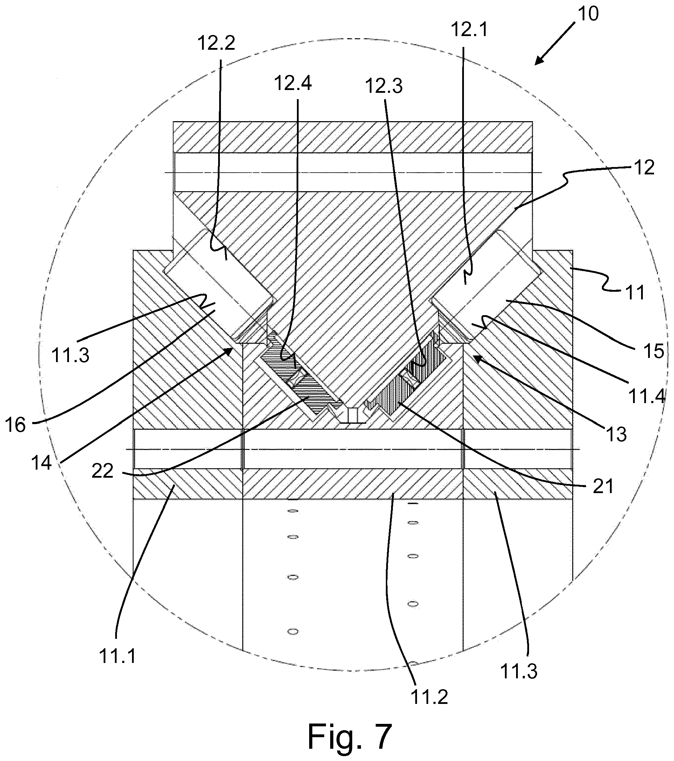

Die **Figuren 6** **und** **7** zeigen ein zweites Ausführungsbeispiel einer Lageranordnung 10 gemäß der Erfindung. Im Unterschied zu dem ersten Ausführungsbeispiel weist die Lageranordnung 10 gemäß dem zweiten Ausführungsbeispiel zwei Wälzlager- und zwei Gleitlagersegmentreihen auf. Die erste Gleitlagersegmentreihe mit den ersten Gleitlagersegmenten 21 und die zweite Gleitlagersegmentreihe mit den ersten Gleitlagersegmenten 22 sind beide zwischen den Wälzlagerreihen 13, 14 angeordnet. Die ersten Gleitlagersegmente 21 wirken mit einer ersten Gleitfläche 12.3 des zweiten Lagerrings 12 zusammen und die zweiten Gleitlagersegmente 22 mit einer zweiten Gleitfläche 12.4. Die erste Gleitfläche 12.3 ist in einem Winkel gegenüber einer Radialebene angeordnet, welcher identisch zu dem Winkel ist, welchen die erste Laufbahn 12,1 mit er Radialebene einschließt. Die zweite Gleitfläche 12.4 ist in einem Winkel gegenüber einer Radialebene angeordnet, welcher identisch zu dem Winkel ist, welchen die zweite Laufbahn 12,2 gegenüber der Radialebene einschließt. Der Betrag dieser Winkel liegt im Bereich zwischen 0° und 90°, bevorzugt zwischen 30° und 60°, besonders bevorzugt zwischen 40° und 50°, beispielsweise bei 45° liegt. Insofern weist der zweite Lagerring 12 einen im Wesentlichen V-förmigen oder trapezförmigen Querschnitt auf.

Der Darstellung in **Figur 6** ist zu entnehmen, dass die ersten Gleitlagersegmente 21 der ersten Gleitlagersegmentreihe entlang der Umfangsrichtung gleichmäßig über den gesamten ersten Lagerring verteilt angeordnet sind. Die erste Gleitlagersegmentreihe erstreckt sich in Umfangsrichtung also um den gesamten ersten Lagerring 11. Die ersten Gleitlagersegmente 21 sind jeweils in einem identischen Abstand zueinander angeordnet. Die ersten und die zweiten Gleitlagersegmente 21, 22 sind hinsichtlich einer senkrecht zu einer Drehachse der Lageranordnung angeordneten Radialebene asymmetrisch angeordnet. Die zweite Gleitlagersegmentreihe weist einen ersten kreisringsegmentförmigen Bereich auf, in welchem mehrere Gleitlagersegmente 22 angeordnet sind und einen zweiten kreisringsegmentförmigen Bereich, in welchem keine Gleitlagersegmente angeordnet sind. In der Darstellung in **Figur 6** ist der erste kreisringsegmentförmige Bereich der zweiten Gleitlagersegmentreihe oben und der zweite kreisringsegmentförmige Bereich unten angeordnet.

Die **Figur 11** zeigt ein Gleitlagersegment 21, 22, 23 gemäß einem zweiten Ausführungsbeispiel in einer perspektivischen Darstellung. Im Gegensatz zu dem in den **Figuren 8, 9** **und** **10** gezeigten Gleitlagersegment 21, 22, 23 ist dieses Gleitlagersegment 21, 22, 23 derart ausgebildet, dass zwischen dem Gleitlagersegment 21, 22, 23 und dem zweiten Lagerring 11 mehrere, insbesondere vier, Druckräume gebildet sind. Die einzelnen Druckräume werden nach unten durch vier Druckflächen 27, 27', 27", 27"' und seitlich durch den Randvorsprung 31 sowie weitere Vorsprünge 32 begrenzt. Die Druckflächen 27, 27', 27", 27'" sind kreissektorförmig ausgebildet. Die Vorsprünge 32 teilen die Oberseite des Gleitlagersegments 21, 22, 23 in mehrere, insbesondere vier, Kreissektoren.

Die einzelnen Druckräume sind mit dem ersten Druckraum 24 an der Unterseite des Gleitlagersegments 21, 22, 23 über mehrere, durch das Gleitlagersegment 21, 22, 23 verlaufende Kanäle 28, 28', 28", 28"' verbunden. Insofern ist jeder Druckraum an der Oberseite des Gleitlagerelements über genau einen Kanal 28, 28', 28", 28'" mit dem ersten Druckraum 24 verbunden. Innerhalb der Kanäle 28, 28', 28", 28'" kann jeweils eine Querschnittsverringerung, insbesondere eine Strömungsdrossel, angeordnet sein.

Das in Figur 11 gezeigte Gleitlagersegment 21, 22, 23 kann bei den vorstehend beschriebenen Lageranordnungen 10 eingesetzt werden und bietet gegenüber dem in Figur 8, 9 und 10 gezeigten Gleitlagersegment 21, 22, 23 den Vorteil, dass die Neigung des Gleitlagersegments 21, 22, 23 zu einem Verkippen gegenüber der jeweiligen Gleitfläche 12.3, 12.4, 12.5 verringert werden kann.

Die Summe der zweiten Druckflächen 27, 27', 27", 27'" ist größer als die erste Druckfläche 26. Bei gleichem Druck in dem ersten und dem zweiten Druckraum kann durch eine derartige Dimensionierung der Druckflächen erreicht werden, dass die auf die zweiten Druckflächen 27, 27', 27", 27'" wirkende, resultierende Kraft größer ist als die Kraft, die auf die erste Druckfläche 26 wirkt. Das Gleitlagersegment wird daher selbsttätig von der Gleitfläche des zweiten Lagerrings weggedrückt, wodurch der Druck im zweiten Druckraum durch ablaufendes Schmiermittel abnimmt bis ein Kraftgleichgewicht zwischen den beiden Kräften erreicht ist. Das Gleitlagersegment kann in dem Gleichgewichtszustand eine Stellung einnehmen, in welcher ein ausreichender Schmiermittelspalt zwischen dem Gleitlagersegment und der Gleitfläche vorhanden ist. Hierdurch kann verhindert werden, dass das Gleitlagersegment in unerwünschte Anlage mit der Gleitfläche an dem zweiten Lagerring kommt, so dass ein verschleißfreier Betrieb ermöglicht wird.

Die vorstehend beschriebenen Lageranordnungen 10 weisen jeweils einen ersten Lagerring 11, einen zweiten Lagerring 12 und mindestens eine Wälzkörperreihe 13, 14 mit mehreren Wälzkörpern 15, 16 auf, die an einer ersten Laufbahn 11.4, 11.5 des ersten Lagerrings 11 und an einer zweiten Laufbahn 12.1, 12.2 des zweiten Lagerrings 12 abrollbar angeordnet sind. An dem ersten Lagerring 11 ist mindestens ein hydrostatisch abgestütztes erstes Gleitlagersegment 21, 22, 23 angeordnet, das mit einer an dem zweiten Lagerring 12 angeordneten ersten Gleitfläche 12.3, 12,4, 12,5 zusammenwirkt.

In der vorstehenden Beschreibung soll die Verwendung eines bestimmten oder unbestimmten Artikels zusammen mit einem Substantiv auch den Plural des Substantivs einschließen, sofern nichts anderes erwähnt wird. Die Begriffe "erstes", "zweites", "drittes" und "viertes" in der Beschreibung und den Ansprüchen sollen das Unterscheiden ähnlicher Elemente voneinander ermöglichen und beschreiben keine bestimmte Abfolge dieser Elemente. Insbesondere dient die Nomenklatur der "ersten Gleitlagersegmente", "zweiten Gleitlagersegmente" und "dritten Gleitlagersegmente" lediglich der Zuweisung zu einer Gleitlagersegmentreihe. Die im Zusammenhang mit einer Gleitlagersegmentreihe beschrieben vorteilhaften Ausgestaltungen und Merkmale können auch bei den Gleitlagersegmenten der anderen Reihen Verwendung finden.

### Bezugszeichenliste

- 1: Windenergieanlage
- 2: Rotorblatt
- 3: Rotor
- 4: Gondel
- 5: Turm

- 10: Lageranordnung
- 11: Lagerring
- 11.1, 11.2, 11.3: Lagerringteil
- 11.4, 11.5: Laufbahn
- 11.6: Aufnahmetasche
- 12: Lagerring
- 12.1, 12.2: Laufbahn
- 12.3, 12.4, 12.5: Gleitfläche
- 13: Wälzkörperreihe
- 14: Wälzkörperreihe
- 15: Wälzkörper
- 16: Wälzkörper
- 17: Zuführung

- 21: Gleitlagersegment
- 22: Gleitlagersegment
- 23: Gleitlagersegment
- 24: Druckraum
- 25: Druckraum
- 26: Druckfläche
- 27: Druckfläche
- 27', 27", 27'": Druckfläche
- 28: Kanal
- 28', 28", 28'": Kanal
- 29: Querschnittsverengung
- 30: Dichtelement
- 31: Randvorsprung
- 32: Vorsprung
- A: axiale Richtung
- B: Bewegungsrichtung
- D: Drehachse
- R: radiale Richtung

## Patentansprüche

1. Lageranordnung (10) mit einem ersten Lagerring (11), einem zweiten Lagerring (12) und mindestens einer Wälzkörperreihe (13, 14) mit mehreren Wälzkörpern (15, 16), die an einer ersten Laufbahn (11.4, 11.5) des ersten Lagerrings (11) und an einer zweiten Laufbahn (12.1, 12.2) des zweiten Lagerrings (12) abrollbar angeordnet sind, wobei an dem ersten Lagerring (11) mindestens ein hydrostatisch abgestütztes erstes Gleitlagersegment (21, 22, 23) angeordnet ist, das mit einer an dem zweiten Lagerring (12) angeordneten ersten Gleitfläche (12.3, 12.4, 12.5) zusammenwirkt, **dadurch gekennzeichnet, dass** das mindestens eine erste Gleitlagersegment (21, 22, 23) in einer Bewegungsrichtung (B) bewegbar und um eine Kippachse kippbar gelagert ist, welche senkrecht zu der Bewegungsrichtung (B) ausgerichtet ist.

2. Lageranordnung nach Anspruch 1, **dadurch gekennzeichnet, dass** an dem ersten Lagerring (11) mehrere hydrostatisch abgestützte erste Gleitlagersegmente (21, 22, 23) angeordnet sind, die in einer Umfangsrichtung des ersten Lagerrings (11) voneinander beabstandet sind und mit einer an dem zweiten Lagerring (12) angeordneten ersten Gleitfläche (12.3, 12.4, 12.5) zusammenwirken.

3. Lageranordnung nach einem der vorhergehenden Ansprüche, **dadurch gekennzeichnet, dass** das erste Gleitlagersegment (21, 22, 23) oder die ersten Gleitlagersegmente (21, 22, 23) in einer senkrecht zu der ersten Gleitfläche (12.3, 12.4, 12.5) angeordneten Bewegungsrichtung (B) bewegbar gelagert sind.

4. Lageranordnung nach einem Ansprüche 2 oder 3, **dadurch gekennzeichnet, dass** die ersten Gleitlagersegmente (21, 22, 23) entlang der Umfangsrichtung gleichmäßig über den gesamten ersten Lagerring (11) verteilt angeordnet sind.

5. Lageranordnung nach einem der Ansprüche 2 oder 3, **dadurch gekennzeichnet, dass** die Gleitlagersegmente (21, 22, 23) entlang der Umfangsrichtung ungleichmäßig über den gesamten ersten Lagerring (11) verteilt angeordnet sind.

6. Lageranordnung nach einem der vorhergehenden Ansprüche, **dadurch gekennzeichnet, dass** an dem ersten Lagerring (11) mindestens ein hydrostatisch abgestütztes zweites Gleitlagersegment (21, 22, 23) angeordnet ist, das mit einer an dem zweiten Lagerring (12) angeordneten zweiten Gleitfläche (12.3, 12.4, 12.5) zusammenwirkt.

7. Lageranordnung nach einem der vorhergehenden Ansprüche, **dadurch gekennzeichnet, dass** an dem ersten Lagerring (11) mehrere hydrostatisch abgestützte zweite Gleitlagersegmente (21, 22, 23) angeordnet sind, die in einer Umfangsrichtung des ersten Lagerrings (11) voneinander beabstandet sind und mit einer an dem zweiten Lagerring (12) angeordneten zweiten Gleitfläche (12.3, 12.4, 12.5) zusammenwirken.

8. Lageranordnung nach Anspruch 7, **dadurch gekennzeichnet, dass** die ersten Gleitlagersegmente (21, 22, 23) und die zweiten Gleitlagersegmente (21, 22, 23) hinsichtlich einer senkrecht zu einer Drehachse (D) der Lageranordnung angeordneten Radialebene asymmetrisch angeordnet sind.

9. Lageranordnung nach einem der vorhergehenden Ansprüche, **dadurch gekennzeichnet, dass** der erste Lagerring (11) als feststehender Lagerring ausgebildet ist und der zweite Lagerring (12) gegenüber dem ersten Lagerring drehbar ist.

10. Lageranordnung nach einem der vorhergehenden Ansprüche, **dadurch gekennzeichnet, dass** die Wälzkörper (15, 16) als Kegelrollen ausgebildet sind.

11. Lageranordnung nach einem der vorhergehenden Ansprüche, **dadurch gekennzeichnet, dass** mindestens ein erstes Gleitlagersegment (21, 22, 23) derart in einer Aufnahmetasche (11.6) des ersten Lagerrings (11) aufgenommen ist, dass zwischen dem ersten Lagerring (1) und dem ersten Gleitlagersegment (21, 22, 23) ein erster Druckraum (24) gebildet ist und das erste Gleitlagersegment (21, 22, 23) derart ausgebildet ist, dass zwischen dem ersten Gleitlagersegment (21, 22, 23) und dem zweiten Lagerring (12) ein zweiter Druckraum (25) gebildet ist, wobei der erste Druckraum (24) und der zweite Druckraum (25) über einen durch das erste Gleitlagersegment (21, 22, 23) verlaufenden Kanal (28) verbunden sind.

12. Lageranordnung nach Anspruch 11, **dadurch gekennzeichnet, dass** das erste Gleitlagersegment (21, 22, 23) eine erste Druckfläche (26) aufweist, die dem ersten Druckraum (24) zugewandt ist und eine zweite Druckfläche (27) oder mehrere zweite Druckflächen (27, 27', 27", 27"'), die dem zweiten Druckraum (25) zugewandt ist oder sind, wobei die erste Druckfläche (26) kleiner als die zweite Druckfläche (27) oder die Summe der mehreren zweiten Druckflächen (27, 27', 27", 27'") ist.

13. Lageranordnung nach Anspruch 12, **dadurch gekennzeichnet, dass** das die zweite Druckfläche (27) des ersten Gleitlagersegments (21, 22, 23) durch einen Randvorsprung (31) begrenzt ist.

14. Lageranordnung nach einem der Ansprüche 11 bis 13, **dadurch gekennzeichnet, dass** in dem Kanal (28) eine Querschnittsverengung (29), insbesondere eine Strömungsdrossel, angeordnet ist.

15. Lageranordnung nach einem der Ansprüche 11 bis 14, **dadurch gekennzeichnet, dass** das erste Gleitlagersegment (21, 22, 23) derart ausgebildet ist, und zwischen dem ersten Gleitlagersegment (21, 22, 23) und dem zweiten Lagerring (12) mehrere, insbesondere drei oder vier, zweite Druckräume gebildet sind, wobei der erste Druckraum (24) und die mehreren zweiten Druckräume über mehrere durch das erste Gleitlagersegment verlaufende Kanäle (28, 28', 28", 28"') verbunden sind.

16. Windenergieanlage (1) mit einer Rotorwelle, **dadurch gekennzeichnet, dass** die Rotorwelle über eine Lageranordnung (10) nach einem der vorhergehenden Ansprüche gelagert ist.

17. Werkzeugmaschine mit einem Drehtisch, **dadurch gekennzeichnet, dass** der Drehtisch über eine Lageranordnung (10) nach einem der Ansprüche 1 bis 15 gelagert ist.

18. Sende- und/oder Empfangseinrichtung mit einer feststehenden Basis und einer gegenüber der Basis drehbaren Antenne, **dadurch gekennzeichnet, dass** die Antenne über eine Lageranordnung (10) nach einem der Ansprüche 1 bis 15 an der Basis gelagert ist.

## Claims

1. A bearing assembly (10) having a first bearing ring (11), a second bearing ring (12), and at least one row (13, 14) of rolling elements having a plurality of rolling elements (15, 16) which are disposed so as to be capable of rolling on a first raceway (11.4, 11.5) of the first bearing ring (11) and on a second raceway (12.1, 12.2) of the second bearing ring (12), wherein at least one hydrostatically supported first sliding bearing segment (21, 22, 23) which interacts with a first bearing face (12.3, 12.4, 12.5) that is disposed on the second bearing ring (12) is disposed on the first bearing ring (11), **characterized in that** the at least one first sliding bearing segment (21, 22, 23) is mounted so as to be movable in a movement direction (B) and tiltable about a tilting axis which is disposed perpendicular to the movement direction (B).

2. The bearing assembly as claimed in claim 1, **characterized in that** a plurality of hydrostatically supported first sliding bearing segments (21, 22, 23) which are mutually spaced apart in a circumferential direction of the first bearing ring (11) and interact with a first bearing face (12.3, 12.4, 12.5) that is disposed on the second bearing ring (12) are disposed on the first bearing ring (11).

3. The bearing assembly as claimed in one of the preceding claims, **characterized in that** the first sliding bearing segment (21, 22, 23) or the first sliding bearing segments (21, 22, 23) is/are mounted so as to be movable in a movement direction (B) that is disposed so as to be perpendicular to the first bearing face (12.3, 12.4, 12.5).

4. The bearing assembly as claimed in one of claims 2 or 3, **characterized in that** the first sliding bearing segments (21, 22, 23) are disposed so as to be distributed uniformly across the entire first bearing ring (11) along the circumferential direction.

5. The bearing assembly as claimed in one of claims 2 or 3, **characterized in that** the sliding bearing segments (21, 22, 23) are disposed so as to be distributed non-uniformly across the entire first bearing ring (11) along the circumferential direction.

6. The bearing assembly as claimed in one of the preceding claims, **characterized in that** at least one hydrostatically supported second sliding bearing segment (21, 22, 23) which interacts with a second bearing face (12.3, 12.4, 12.5) that is disposed on the second bearing ring (12) is disposed on the first bearing ring (11).

7. The bearing assembly as claimed in one of the preceding claims, **characterized in that** a plurality of hydrostatically supported second sliding bearing segments (21, 22, 23) which are mutually spaced apart in a circumferential direction of the first bearing ring (11) and interact with a second bearing face (12.3, 12.4, 12.5) that is disposed on the second bearing ring (12) are disposed on the first bearing ring (11).

8. The bearing assembly as claimed in claim 7, **characterized in that** the first sliding bearing segments (21, 22, 23) and the second sliding bearing segments (21, 22, 23) are disposed so as to be asymmetrical in terms of a radial plane that is disposed so as to be perpendicular to a rotation axis (D) of the bearing assembly.

9. The bearing assembly as claimed in one of the preceding claims, **characterized in that** the first bearing ring (11) is configured as a stationary bearing ring and the second bearing ring (12) is rotatable in relation to the first bearing ring.

10. The bearing assembly as claimed in one of the preceding claims, **characterized in that** the rolling elements (15, 16) are configured as tapered rollers.

11. The bearing assembly as claimed in one of the preceding claims, **characterized in that** at least one first sliding bearing element (21, 22, 23) is received in a receptacle pocket (11.6) of the first bearing ring (11) in such a manner that a first compression chamber (24) is formed between the first bearing ring (11) and the first sliding bearing segment (21, 22, 23), and the first sliding bearing segment (21, 22, 23) is configured in such a manner that a second compression chamber (25) is formed between the first sliding bearing segment (21, 22, 23) and the second bearing ring (12), wherein the first compression chamber (24) and the second compression chamber (25) are connected by way of a duct (28) that runs through the first sliding bearing segment (21, 22, 23).

12. The bearing assembly as claimed in claim 11, **characterized in that** the first sliding bearing segment (21, 22, 23) has a first pressure surface (26) which faces the first compression chamber (24) and a second pressure surface (27) or a plurality of second pressure surfaces (27, 27', 27", 27"') which faces/face the second compression chamber (25), wherein the first pressure surface (26) is smaller than the second pressure surface (27) or the sum of the plurality of second pressure surfaces (27, 27', 27", 27"').

13. The bearing assembly as claimed in claim 12, **characterized in that** the second pressure surface (27) of the first sliding bearing segment (21, 22, 23) is delimited by a peripheral protrusion (31).

14. The bearing assembly as claimed in one of claims 11 to 13, **characterized in that** a cross-sectional constriction (29), in particular a flow throttle, is disposed in the duct (28).

15. The bearing assembly as claimed in one of the claims 11 to 14, **characterized in that** the first sliding bearing segment (21, 22, 23) is configured in such a manner, that a plurality of second compression chambers, in particular three or four second compression chambers, are formed between the first sliding bearing segment (21, 22, 23) and the second bearing ring (12), wherein the first compression chamber (24) and the plurality of second compression chambers are connected by way of a plurality of ducts (28, 28', 28", 28"') that run through the first sliding bearing segment.

16. A wind turbine (1) having a rotor shaft, **characterized in that** the rotor shaft is mounted by way of a bearing assembly (10) as claimed in one of the preceding claims.

17. A machine tool having a rotary table, **characterized in that** the rotary table is mounted by way of a bearing assembly (10) as claimed in one of claims 1 to 15.

18. A transmitting and/or receiving installation having a stationary base and an antenna that is rotatable in relation to the base, **characterized in that** the antenna is mounted on the base by way of a bearing assembly (10) as claimed in one of claims 1 to 15.

## Revendications

1. Ensemble palier (10), comprenant une première bague de palier (11), une deuxième bague de palier (12) et au moins une rangée d'éléments de roulement (13, 14) dotée de plusieurs éléments de roulement (15, 16) qui sont disposés de manière à pouvoir rouler sur un premier chemin de roulement (11.4, 11.5) de la première bague de palier (11) et sur un deuxième chemin de roulement (12.1, 12.2) de la deuxième bague de palier (12), dans lequel, sur la première bague de palier (11) est disposé au moins un premier segment de palier à glissement (21, 22, 23), supporté de manière hydrostatique, qui coopère avec une première surface de glissement (12.3, 12.4, 12.5) disposée sur la deuxième bague de palier (12), **caractérisé en ce que** ledit au moins un premier segment de palier à glissement (21, 22, 23) est mobile dans une direction de mouvement (B) et logé basculant autour d'un axe de basculement qui est orienté perpendiculairement à la direction de mouvement (B).

2. Ensemble palier selon la revendication 1, **caractérisé en ce que** sur la première bague de palier (11) sont disposés plusieurs premiers segments de palier à glissement (21, 22, 23), supportés de manière hydrostatique, qui sont espacés les uns des autres dans une direction circonférentielle de la première bague de palier (11) et coopèrent avec une première surface de glissement (12.3, 12.4, 12.5) disposée sur la deuxième bague de palier (12).

3. Ensemble palier selon l'une quelconque des revendications précédentes, **caractérisé en ce que** le premier segment de palier à glissement (21, 22, 23) ou les premiers segments de palier à glissement (21, 22, 23) sont logés mobiles dans une direction de mouvement (B) disposée perpendiculairement à la première surface de glissement (12.3, 12.4, 12.5).

4. Ensemble palier selon l'une quelconque des revendications 2 ou 3, **caractérisé en ce que** les premiers segments de palier à glissement (21, 22, 23) sont disposés le long de la direction circonférentielle en étant répartis régulièrement sur l'ensemble de la première bague de palier (11).

5. Ensemble palier selon l'une quelconque des revendications 2 ou 3, **caractérisé en ce que** les segments de palier à glissement (21, 22, 23) sont disposés le long de la direction circonférentielle en étant répartis irrégulièrement sur l'ensemble de la première bague de palier (11).

6. Ensemble palier selon l'une quelconque des revendications précédentes, **caractérisé en ce que** sur la première bague de palier (11) est disposé au moins un deuxième segment de palier à glissement (21, 22, 23), supporté de manière hydrostatique, qui coopère avec une deuxième surface de glissement (12.3, 12.4, 12.5) disposée sur la deuxième bague de palier (12).

7. Ensemble palier selon l'une quelconque des revendications précédentes, **caractérisé en ce que** sur la première bague de palier (11) sont disposés plusieurs deuxièmes segments de palier à glissement (21, 22, 23), supportés de manière hydrostatique, qui sont espacés les uns des autres dans une direction circonférentielle de la première bague de palier (11) et coopèrent avec une deuxième surface de glissement (12.3, 12.4, 12.5) disposée sur la deuxième bague de palier (12).

8. Ensemble palier selon la revendication 7, **caractérisé en ce que** les premiers segments de palier à glissement (21, 22, 23) et les deuxièmes segments de palier à glissement (21, 22, 23) sont disposés de manière asymétrique par rapport à un plan radial disposé perpendiculairement à un axe de rotation (D) de l'ensemble palier.

9. Ensemble palier selon l'une quelconque des revendications précédentes, **caractérisé en ce que** la première bague de palier (11) est réalisée sous la forme d'une bague de palier fixe, et la deuxième bague de palier (12) peut tourner par rapport à la première bague de palier.

10. Ensemble palier selon l'une quelconque des revendications précédentes, **caractérisé en ce que** les éléments de roulement (15, 16) sont réalisés sous forme de rouleaux coniques.

11. Ensemble palier selon l'une quelconque des revendications précédentes, **caractérisé en ce qu'**au moins un premier segment de palier à glissement (21, 22, 23) est reçu dans une poche de réception (11.6) de la première bague de palier (11) de telle sorte qu'entre la première bague de palier (1) et le premier segment de palier à glissement (21, 22, 23), une première chambre de pression (24) est formée, et le premier segment de palier à glissement (21, 22, 23) est réalisé de telle sorte qu'entre le premier segment de palier à glissement (21, 22, 23) et la deuxième bague de palier (12), une deuxième chambre de pression (25) est formée, la première chambre de pression (24) et la deuxième chambre de pression (25) étant reliées par un canal (28) s'étendant à travers le premier segment de palier à glissement (21, 22, 23).

12. Ensemble palier selon la revendication 11, **caractérisé en ce que** le premier segment de palier à glissement (21, 22, 23) présente une première surface de pression (26) qui est tournée vers la première chambre de pression (24), et une deuxième surface de pression (27) ou plusieurs deuxièmes surfaces de pression (27, 27', 27", 27"') qui est/sont tournée(s) vers la deuxième chambre de pression (25), la première surface de pression (26) étant inférieure à la deuxième surface de pression (27) ou à la somme des plusieurs deuxièmes surfaces de pression (27, 27', 27", 27"').

13. Ensemble palier selon la revendication 12, **caractérisé en ce que** la deuxième surface de pression (27) du premier segment de palier à glissement (21, 22, 23) est délimitée par une saillie de bord (31).

14. Ensemble palier selon l'une quelconque des revendications 11 à 13, **caractérisé en ce qu'**un rétrécissement de section (29), en particulier un dispositif d'étranglement d'écoulement, est disposé dans le canal (28) .

15. Ensemble palier selon l'une quelconque des revendications 11 à 14, **caractérisé en ce que** le premier segment de palier à glissement (21, 22, 23) est réalisé de la sorte, et entre le premier segment de palier à glissement (21, 22, 23) et la deuxième bague de palier (12), plusieurs, en particulier trois ou quatre, deuxièmes chambres de pression sont formées, la première chambre de pression (24) et les plusieurs deuxièmes chambres de pression étant reliées par plusieurs canaux (28, 28', 28", 28"') s'étendant à travers le premier segment de palier à glissement.

16. Eolienne (1), comprenant un arbre de rotor, **caractérisée en ce que** l'arbre de rotor est monté par l'intermédiaire d'un ensemble palier (10) selon l'une quelconque des revendications précédentes.

17. Machine-outil comprenant une table tournante, **caractérisée en ce que** la table tournante est montée par l'intermédiaire d'un ensemble palier (10) selon l'une quelconque des revendications 1 à 15.

18. Dispositif d'émission et/ou de réception, comprenant une base fixe et une antenne pouvant tourner par rapport à la base, **caractérisé en ce que** l'antenne est montée sur la base par l'intermédiaire d'un ensemble palier (10) selon l'une quelconque des revendications 1 à 15.
